(19) Europäisches Patentamt

European Patent Office

Office européen des brevets

(11) Veröffentlichungsnummer: **0 343 605 B1**

(12) **EUROPÄISCHE PATENTSCHRIFT**

(45) Veröffentlichungstag der Patentschrift: **30.12.92**

(51) Int. Cl.5: **A01N 33/04**

(21) Anmeldenummer: **89109286.8**

(22) Anmeldetag: **23.05.89**

(54) **Tuberkulozides Desinfektionsmittel.**

(30) Priorität: **27.05.88 CH 2038/88**

(43) Veröffentlichungstag der Anmeldung:
**29.11.89 Patentblatt 89/48**

(45) Bekanntmachung des Hinweises auf die
Patenterteilung:
**30.12.92 Patentblatt 92/53**

(84) Benannte Vertragsstaaten:
**AT BE CH DE ES FR GB IT LI NL**

(56) Entgegenhaltungen:

**APPLIED MICROBIOLOGY, Band 14, Nr. 3, Mai
1966, Seiten 308-319, American Society for
Microbiology, US; H.J. HUECK et al.:
"Bacteriostatic, fungistatic, and algistatic
activity of fatty nitrogen compounds"**

(73) Patentinhaber: **LONZA AG
Gampel/Wallis Geschäftsleitung Basel
CH-4002 Basel(CH)**

(72) Erfinder: **Güller, Siegfried, Dr.
Starenstrasse 1
Bottmingen Kanton Baselland(CH)**
Erfinder: **Fritschi, Joachim, Dipl.-Ing.
Im Dornbusch 7
W-7850 Lörrach(DE)**
Erfinder: **Lichtenberg, Florian, Dr., Dipl-Chem.
Röttler Ring 12
W-7889 Grenzach(DE)**

(74) Vertreter: **Weinhold, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
W-8000 München 40(DE)**

EP 0 343 605 B1

**Beschreibung**

Die vorliegende Erfindung betrifft die Verwendung von N,N-Bis-(3-aminopropyl)laurylamin in aldehydfreien flüssigen Desinfektionsmitteln mit Wirkung gegen Mikrobakterien, die insbesondere zur Desinfektion von Instrumenten, Oberflächen und Wäsche geeignet sind.

Die zahlreichen Einsatzgebiete von Desinfektionsmitteln stellen an diese je nach den zu bekämpfenden Mikroorganismen und der vorgesehenen Anwendung, wie z.B. Händedesinfektion, Desinfektion des Operationsfeldes oder von Wunden, Instrumentendesinfektion, Desinfektion von Oberflächen, von Wäsche usw., unterschiedliche Anforderungen.

Eine dieser Anforderungen ist die Wirksamkeit gegen Mykobakterien, insbesondere den Erreger der Tuberkulose, Mycobacterium tuberculosis. Wegen des besonderen Aufbaus der Mykobakterien, die über eine widerstandsfähige Hülle verfügen, besitzen nur wenige der als Bakterizide bekannten Verbindungen eine ausreichende abtötende Wirkung, die Voraussetzung für eine erfolgreiche Desinfektion ist. Oftmals wird stattdessen nur eine Hemmung der Vermehrung der Mykobakterien beobachtet, die mehr oder weniger reversibel ist und daher keinen Schutz vor einer Infektion darstellt.

Die meisten der bekannten Desinfektionsmittel, für die eine tuberkulozide Wirkung nachgewiesen wurde, enthalten als Wirkstoff einen oder mehrere Aldehyde, wie z.B. Formaldehyd, Succinaldehyd, Glutaraldehyd oder Glyoxal.

Bedingt durch den Aldehydgehalt weisen diese Desinfektionsmittel jedoch auch erhebliche Nachteile auf.

Vor allem Formeldehyd hat einen unangenehmen Geruch und eine starke Reizwirkung auf die Schleimhäute. Seine Lösungen wirken ätzend und sensibilisierend auf die Haut. Schliesslich steht er im Verdacht, karzinogene und mutagene Eigenschaften zu besitzen.

Aldehyde wirken weiterhin denaturierend auf Eiweiss, was bei eiweisshaltigen Verschmutzungen zu Krustenbildung führt und die Reinigung der betroffenen Gegenstände erschwert. Dies ist besonders für eine Verwendung als tuberkulozides Desinfektionsmittel nachteilig, da hiermit die Desinfektion zweckmässigerweise vor der Reinigung zu erfolgen hat. Aufgrund ihrer chemischen Reaktivität sind Aldehyde ferner nicht mit allen Zusatzstoffen verträglich.

Aufgabe der Erfindung war daher, ein Desinfektionsmittel zur Verfügung zu stellen, das eine gute Wirksamkeit gegen Mykobakterien, insbesondere Mycobacterium tuberculosis, besitzt, ohne die durch einen Gehalt an Aldehyden bedingten Nachteile aufzuweisen.

Gemäss Patentanspruch 1 wird diese Aufgabe durch Einsatz von N,N-Bis-(3-aminopropyl)-laurylamin als tuberkulozider Wirkstoff gelöst. Es war bekannt, dass dieses Amin gegenüber einer Reihe von Mikroorganismen biostatische Eigenschaften zeigt (H.J.Hueck, D.M.M.Adema und J.R.Wiegmann, Appl.Microbiol. 14, 308 (1966)).

Ueberraschend wurde nun gefunden, dass N,N-Bis-(3-aminopropyl)-laurylamin auch gegen Mykobakterien gut wirksam ist und diese nicht nur in ihrer Vermehrung hemmt, sondern sicher abtötet. Eine derartige Wirkung ist bisher für keinen Vertreter dieser Verbindungsklasse beschrieben worden.

Das erfindungsgemässe tuberkulozide Desinfektionsmittel enthält N,N-Bis-(3-aminopropyl)-laurylamin zweckmässig in einer Konzentration von 0,05 bis 30 Gew.%, vorzugsweise 8 bis 15 Gew.%. Die gebrauchsfertige Lösung enthält N,N-Bis-(3-aminopropyl)-laurylamin vorzugsweise in einer Konzentration von 0,2 bis 5 Gew.%, die gegebenenfalls durch Verdünnen einer konzentrierten Vorratslösung herzustellen ist. Der Wirkstoff N,N-Bis- (3-aminopropyl)-laurylamin wird vorzugsweise in reiner Form eingesetzt; es ist jedoch auch möglich, Gemische mit anderen N,N-Bis-(3-aminopropyl)-alkylaminen zu verwenden, wenn diese ausreichende Mengen N,N-Bis-(3-aminopropyl)-laurylamin enthalten. Solche Gemische können beispielsweise aus entsprechenden technischen Fettamingemischen, wie insbesondere Kokosamin, nach bekannten Verfahren hergestellt werden.

Als Lösungsmittel findet vorzugsweise Wasser oder ein wasserhaltiges Lösungsmittelgemisch Verwendung. Wird ein Lösungsmittelgemisch eingesetzt, so enthält dieses vorzugsweise einen oder mehrere Alkohole mit 1 bis 4 C-Atomen, wie Methanol, Ethanol, Propanol, Isopropylalkohol, n-Butanol, iso-Butanol, sec-Butanol oder tert.-Butylalkohol, besonders bevorzugt Ethanol, Propanol oder Isopropylalkohol.

Zur Unterstützung der desinfizierenden Wirkung, insbesondere an verschmutzten Gegenständen oder Oberflächen, werden dem erfindungsgemässen Desinfektionsmittel vorzugsweise ein oder mehrere Tenside zugesetzt.

Als Tenside eignen sich vorzugsweise anionische Tenside, z.B. Seifen, wie Natriumstearat, Kaliumstearat oder Triethanolaminseifen, sulfonierte aromatische Kohlenwasserstoffe, wie n-Alkylbenzolsulfonate, sulfonierte aliphatische Kohlenwasserstoffe, wie sekundäre Alkansulfonate, sulfonierte α-Olefine, sulfatierte Fettalkohole, wie Natriumlaurylsulfat, sulfatierte Fettalkoholether, wie Natriumlaurylpolyglykolethersulfat, sulfonierte Fettsäuremethylester, wie Palmkernsulfofettsäuremethylester, sulfonierte Maleinsäureester, wie Laurylsulfosuccinat, oder carboxymethylierte Fettalkoholpolyglykolether, wie Laurylpolyglykoletheracetat, oder nichtionische Tenside, wie Fettalkoholethoxylate, Alkylphenolethoxylate, Fettsäureethoxylate, Fettsäurealkylolamide, Fettsäurealkylolamidethoxylate, Fettaminethoxylate oder Polyalkylenoxid-Blockpolymerisate, oder amphotere Tenside, wie Alkylaminoalkylglycine, Betaine oder Sulfobetaine, oder verträgliche Kombinationen, z.B. von anionischen und nichtanionischen Tensiden.

Weitere bevorzugte Zusätze sind quaternäre Ammoniumverbindungen wie z.B. Trialkylbenzylammoniumchloride.

Zur Verbesserung der Wirkung von zugesetzten Tensiden werden als weitere Zusätze vorzugsweise noch Komplexbildner, wie Ethylendiamintetraessigsäure oder Nitrilotriessigsäure oder deren Salze verwendet.

Das Wirkungsspektrum des erfindungsgemässen Desinfektionsmittels kann durch Zusatz weiterer Wirkstoffe erweitert werden. Hierfür eignen sich vorzugsweise Guanidinderivate wie Dodecylguanidinacetat oder Biguanide wie Chlorhexidin.

Eine bevorzugte Verwendung des erfindungsgemässen Desinfektionsmittels ist die Instrumentendesinfektion.

Die nachfolgenden Beispiele dienen der Erläuterung der vorliegenden Erfindung.

Beispiel 1

Eine Lösung von N,N-Bis-(3-aminopropyl)-laurylamin (30 Gew.%) in Wasser wurde gemäss den "Richtlinien für die Prüfung und Bewertung chemischer Desinfektionsverfahren " (Stand 1.1.1981) der Deutschen Gesellschaft für Hygiene und Mikrobiologie (Gustav Fischer Verlag, Stuttgart, 1981) auf ihre tuberkuloziden Eigenschaften untersucht.

Charakterisierung:

| | |
|---|---|
| Aussehen: | farblose, leicht trübe Lösung |
| Geruch: | leicht seifig |
| pH-Wert (gemessen mittels Glaselektrode): | |
| | pH 11,0 (Konzentrat) |
| | pH 10,5 (1% Gebrauchslösung in WSH) |
| Als Testkeime wurden verwendet: | |
| | Mycobacterium terrae Stamm Heidelberg |
| | Staphylococcus aureus ATCC 6538 |
| | Escherichia coli ATCC 11229 |
| | Pseudomonas aeruginosa ATCC 15442 |
| | Proteus mirabilis ATCC 14153 |
| | Candida albicans ATCC 10231 |

Die Desinfektionsmittel-Prüf-Konzentrationen wurden unmittelbar vor Versuchsbeginn mit Wasser standardisierter Härte (WSH) angesetzt (Herstellung: 17,5 ml 10%ige Lösung in (g/v) Calciumchlorid + 5,0 ml 10%ige Lösung in (g/v) Magnesiumsulfat in 3300 ml Aqua tridest. autoklaviert).

Als Nährmedien wurden verwendet:

Caseinpepton-Sojabohnenpepton-Lösung (CSL) und Caseinpepton-Sojabonenpepton-Agar (CSA).

Für M. terrae: Loewenstein-Jensen (L.-J.)-Medium.

Ergebnisse:

1. Bestimmung der bakteriostatischen und fungistatischen Wirkung mit Hilfe des Verdünnungstestes und der Bestimmung der Eignung von Enthemmungsmitteln (Richtlinie I.2.1):

Die Versuche wurden zweimal durchgeführt, die ungünstigeren Ergebnisse sind in Tabelle 1 wiedergegeben. Es wurden verschiedene Enthemmungsmittelkombinationen untersucht. Als geeignet erwies sich die Enthemmungsmittelkombination "Tween 80®, Saponin, Histidin und Cystein". Diese Kombination wurde in allen Versuchen eingesetzt.

2. Bestimmung der tuberkuloziden Wirkung im Keimträgerversuch (in der für die Instrumentendesinfektion modifizierten Form [Richtlinie II 3b]):

Der für die Instrumentendesinfektion modifizierte Keimträgerversuch mit M. terrae wurde unter Belastung der CSL-Mykobakterien-Suspension mit 20% defibriniertem Rinderblut (Endkonzentration) sowie der Desinfektionsmittellösung mit 0,5% Rinderalbumin durchgeführt. M. terrae wurde als Testkeim verwendet, weil er sich wie M. tuberculosis verhält, aber nicht pathogen ist und reproduzierbarere Ergebnisse liefert. Die Ergebnisse finden sich in Tabelle 2.

Tabelle 1

Ergebnisse der bakteriostatischen und fungistatischen Wirkung der Entkeimungsmittelprüfung im Verdünnungstest

| Konzentration des Prüfpräparates: | E. coli | | | | P. mirabilis | | | | P. aeruginosa | | | | S. aureus | | | | C. albicans | | | |
|---|---|---|---|---|---|---|---|---|---|---|---|---|---|---|---|---|---|---|---|---|
| Testkeim: Nährlösung | 1 | 2 | 3 | 4 | 1 | 2 | 3 | 4 | 1 | 2 | 3 | 4 | 1 | 2 | 3 | 4 | 1 | 2 | 3 | 4 |
| 2,50% | - | - | - | - | - | - | - | - | - | - | - | - | - | - | - | - | - | - | - | - |
| 1,00% | - | - | + | - | - | - | + | - | - | - | - | - | - | - | - | - | - | - | - | - |
| 0,50% | - | + | + | - | - | + | + | + | - | + | + | + | - | - | + | + | - | - | - | - |
| 0,25% | - | + | + | + | + | + | + | + | + | + | + | + | + | + | + | + | - | + | + | - |
| 0,10% | - | + | + | + | + | + | + | + | + | + | + | + | + | + | + | + | - | + | + | - |
| 0,05% | - | - | + | + | + | + | + | + | + | + | + | + | + | + | + | + | - | - | + | + |
| 0,01% | + | + | + | + | + | + | + | + | + | + | + | + | + | + | + | + | + | + | + | + |

Zeichenerklärung: + = Wachstum
- = kein Wachstum

1 = Nährlösung (CSL)
2 = Nährlösung (CSL) + 3% Tween 80Ⓡ + 3% Lecithin, 0,1% Cystein
3 = Nährlösung (CSL) + 3% Tween 80Ⓡ, 3% Saponin, 0,1% Histidin, 0,1% Cystein
4 = Nährlösung (CSL) + 3% Tween 80Ⓡ, 0,3% Lecithin, 0,1% Histidin, 0,5% Na-Thiosulfat

4

Tabelle 2

Ergebnisse der Bestimmung der tuberkuliziden Wirkung im modifizierten Keimträgerversuch unter Belastung der Desinfektionsmittellösung mit 0,5% Rinderalbumin (Doppelversuche)

Testkeim: M. terrae

| Konzentration des Prüfpräparates: | Einwirkungszeit: | | | | |
|---|---|---|---|---|---|
| | 5' | 15' | 30' | 60' | 120' |
| 5,00% | ++ | ++ | -- | -- | -- |
| 4,00% | ++ | ++ | -- | -- | -- |
| 3,00% | ++ | ++ | -- | -- | -- |
| 2,50% | ++ | ++ | -- | -- | -- |
| 2,00% | ++ | ++ | ++ | -- | -- |
| 1,50% | ++ | ++ | -- | -- | -- |
| 1,00% | ++ | ++ | ++ | -- | -- |
| 0,50% | ++ | ++ | ++ | ++ | -- |
| 0,25% | ++ | ++ | ++ | ++ | ++ |
| 0,10% | ++ | ++ | ++ | ++ | ++ |
| Kontrolle | ++ | ++ | ++ | ++ | ++ |

Zeichenerklärung: + = Wachstum
- = kein Wachstum

Keimdichte: 1mg Bakterienfeuchtgewicht pro ml CSL mit 20% Rinderblut belastet

Enthemmungsmittelzusatz zur Nähr- und Waschlösung (CSL): 3% Tween 80 (R), 3% Saponin, 0,1% Histidin, 0,1% Cystein.

Durchführung der Versuche bei einer Reaktionstemperatur von 18° - 20°C

Zusammenfassende Beurteilung:

Aufgrund der nach den "Richtlinien für die Bewertung chemischer Desinfektionsverfahren" der DGHM durchgeführten "In-vitro-Teste" ist das Präparat auch unter den erschwerten Bedingungen des für die Instrumentendesinfektion vorgesehenen Keimträgerversuches als tuberkulozid anzusehen. Der mit Mycobacterium terrae durchgeführte Test ergab eine 1-Stunden-Abtötungskonzentration von 1,0% (entsprechend einer Wirkstoffkonzentration von 0,3%).

Die folgenden Beispiele enthalten bevorzugte Formulierungen des erfindungsgemässen tuberkuloziden Desinfektionsmittels und sollen in 15 bis 30%iger Lösung verwendet werden.

5

Beispiel 2 | Gew.%
--- | ---
N,N-Bis-(3-aminopropyl)-laurylamin | 10-15
Didecyldimethylammoniumchlorid | 7-12
Fettalkoholethoxylat ($C_8$-$C_{12}$-Fettalko-hol, Ethoxylierungsgrad 8-12) | 4-6
Wasser | ad 100

Beispiel 3

N,N-Bis-(3-aminopropyl)-laurylamin | 10-15
--- | ---
N-(Laurylaminopropylen)-glycin | 7-12
Fettalkoholethoxylat ($C_8$-$C_{12}$-Fettalko-hol, Ethoxylierungsgrad 8-12) | 4-6
Wasser | ad 100

Beispiel 4

| | |
|---|---|
| N,N-Bis-(3-aminopropyl)-laurylamin | 10-15 |
| Dodecylguanidinacetat | 4-7 |
| Genapol $^\circledR$ PN 30 (Hoechst) | 3-7 |
| Wasser | ad 100 |

Beispiel 5

| | |
|---|---|
| N,N-Bis-(3-aminopropyl)-laurylamin | 8-15 |
| Natriumethylendiamintetraacetat | 2-4 |
| Fettalkoholethoxylat ($C_8$-$C_{12}$-Fettalkohol, Ethoxylierungsgrad 8-12) | 3-6 |
| Lauryldimethylbenzylammoniumchlorid | 5-10 |
| Wasser | ad 100 |

Beispiel 6

| | |
|---|---|
| N,N-Bis-(3-aminopropyl)-laurylamin | 8-15 |
| Fettalkoholsulfat ($C_{12}$-$C_{14}$-Fettalkohol) | 5-8 |
| Decylsulfonat | 2-5 |
| Bardap $^\circledR$ 26 (LONZA) | 6-10 |
| Ethanol | 5-15 |
| Isopropylalkohol | 5-10 |
| Wasser | ad 100 |

**Patentansprüche**

1. Verwendung von N,N-Bis-(3-aminopropyl)-laurylamin als wirksame Komponente in flüssigen aldehydfreien tuberkuloziden Desinfektionsmitteln.

2. Verwendung von N,N-Bis-(3-aminopropyl)-laurylamin nach Patentanspruch 1, dadurch gekennzeichnet, dass das Desinfektionsmittel N,N-Bis-(3-aminopropyl)-laurylamin in einer Konzentration von 0,05 bis 30 Gew.% und als Lösungsmittel Wasser oder ein wasserhaltiges Gemisch enthält.

3. Verwendung von N,N-Bis-(3-aminopropyl)-laurylamin nach einem oder beiden der Ansprüche 1-2, dadurch gekennzeichnet, dass das Desinfektionsmittel als Lösungsmittel ein Gemisch von Wasser mit mindestens einem Alkohol mit 1 bis 4 C-Atomen enthält.

4.  Verwendung von N,N-Bis-(3-aminopropyl)-laurylamin nach einem oder mehreren der Ansprüche 1 bis 3, dadurch gekennzeichnet, dass das Desinfektionsmittel zusätzlich wenigstens ein Tensid enthält.

5.  Verwendung von N,N-Bis-(3-aminopropyl)-laurylamin nach einem oder mehreren der Ansprüche 1 bis 4, dadurch gekennzeichnet, dass das Desinfektionsmittel zusätzlich wenigstens eine quaternäre Ammoniumverbindung enthält.

6.  Verwendung von N,N-Bis-(3-aminopropyl)-laurylamin nach einem oder beiden der Ansprüche 4 bis 5, dadurch gekennzeichnet, dass das Desinfektionsmittel zusätzlich wenigstens einen Komplexbildner enthält.

7.  Verwendung von N,N-Bis-(3-aminopropyl)-laurylamin nach einem oder mehreren der Ansprüche 1 bis 6, dadurch gekennzeichnet, dass das Desinfektionsmittel zusätzlich wenigstens ein Guanidinderivat und/oder Biguanid enthält.

8.  Verwendung von N,N-Bis-(3-aminopropyl)-laurylamin in einem Desinfektionsmittel nach einem oder mehreren der Ansprüche 1 bis 7 zur Instrumentendesinfektion.

**Claims**

1.  The use of N,N-bis-(3-aminopropyl)-lauryl amine as active component in liquid aldehyde-free tuberculicide disinfectant agents.

2.  The use of N,N-bis-(3-aminopropyl)-lauryl amine according to patent claim 1, characterized in that the disinfectant agent contains N,N-bis—(3-aminopropyl)-lauryl amine in a concentration of 0.05 to 30 weight% and water or a hydrous mixture as solvent.

3.  The use of N,N-bis-(3-aminopropyl)-lauryl amine according to one or both of claims 1 to 2, characterized in that the disinfectant agent contains as solvent a mixture of water with at least one alcohol having 1 to 4 carbon atoms.

4.  The use of N,N-bis-(3-aminopropyl)-lauryl amine according to one or more of claims 1 to 3, characterized in that the disinfectant agent additionally contains at least one tenside.

5.  The use of N,N-bis-(3-aminopropyl)-lauryl amine according to one or more of claims 1 to 4, characterized in that the disinfectant agent additionally contains at least one quaternary ammonium compound.

6.  The use of N,N-bis-(3-aminopropyl)-lauryl amine according to one or both of claims 4 to 5, characterized in that the disinfectant agent additionally contains at least one complexing agent.

7.  The use of N,N-bis-(3-aminopropyl)-lauryl amine according to one or more of claims 1 to 6, characterized in that the disinfectant agent additionally contains at least one guanidine derivative and/or biguanide.

8.  The use of N,N-bis-(3-aminopropyl)-lauryl amine in a disinfectant agent according to one or more of claims 1 to 7 for the disinfection of instruments.

**Revendications**

1.  Utilisation de N,N-Bis-(3-aminopropyl)-laurylamine en tant que composant actif dans des agents désinfectants tuberculicides liquides exempts d'aldéhyde.

2.  Utilisation de N,N-Bis-(3-aminopropyl)-laurylamine selon la revendication 1, caractérisée en ce que l'agent désinfectant contient la N,N-Bis-(3-aminopropyl)-laurylamine dans une concentration de 0,05 jusqu'à 30 % en poids et en tant que solvant de l'eau ou un mélange aqueux.

3. Utilisation de N,N-Bis-(3-aminopropyl)-laurylamine selon l'une ou les deux revendications 1-2, caractérisée en ce que l'agent désinfectant contient en tant que solvant un mélange d'eau avec au moins un alcool ayant 1 à 4 atomes C.

4. Utilisation de N,N-Bis-(3-aminopropyl)-laurylamine selon une ou plusieurs des revendications 1 à 3, caractérisée en ce que l'agent désinfectant contient de plus au moins un agent tensioactif.

5. Utilisation de N,N-Bis-(3-aminopropyl)-laurylamine selon une ou plusieurs des revendications 1 à 4, caractérisée en ce que l'agent désinfectant contient de plus au moins une liaison d'ammonium quaternaire.

6. Utilisation de N,N-Bis-(3-aminopropyl)-laurylamine selon l'une ou les deux des revendications 4 à 5, caractérisée en ce que l'agent désinfectant contient de plus au moins un agent complexant.

7. Utilisation de N,N-Bis-(3-aminopropyl)-laurylamine selon une ou plusieurs des revendications 1 à 6, caractérisée en ce que l'agent désinfectant contient de plus au moins un dérivé de guanidine et/ou un biguanide.

8. Utilisation de N,N-Bis-(3-aminopropyl)-laurylamine dans un agent désinfectant selon une ou plusieurs des revendications 1 jusqu'à 7 pour la désinfection des instruments.